# EUROPEAN PATENT APPLICATION

(11) **EP 1 227 615 A1**
(43) Date of publication of application: **31.07.2002**
(21) Application number: 01960747.2
(22) Date of filing: 07.08.2001
(51) Int. Cl.: H04L 12/00

(54) **METHODS AND SYSTEMS FOR THE BROADCAST INTERNET, AUDIO OR VIDEO CONTENTS WITHOUT PRIOR AGREEMENT WITH THE SERVICE PROVIDER OR RETURN CHANNEL**

(30) Priority: 08.08.2000 WO PCT/ES00/00314
(71) Applicant: Semiconductores Investigaci n Y Diseno S.A. -(SIDSA), 28760 Madrid (ES)
(72) Inventor: AVELLANO FERNANDEZ, José, Luis, E-28760 Madrid (ES); INSENSER FARRE, José, Maria, E-28760 Madrid (ES); MORAN CARRERA, Javier, E-28760 Madrid (ES); SANTOS PEREZ, Carlos, E-28760 Madrid (ES)
(74) Representative: Urizar Anasagasti, José Antonio
(86) International application number: ES0100315
(87) International publication number: WO0215467

(57) **Abstract**

The invention groups a serie of methods and systems that simplify management and broadcasting of data encapsulated in the TCP/IP protocol (Internet Protocol) on digital data broadcasting using the MPEG-system protocol. By using standard methods to access data networks (Internet), digital audio-video networks and data networks using broadcast-oriented wideband means such as satellite, cable or terrestrial link (standards ETSI EN301192 and TR101202), the invention makes it possible to add the broadcast capacity of said services without prior agreement with or explicit control by the broadcast supplier or the existence of a return channel. The method requires: a) a traffic initiator or generator (A), which sets up conventional Internet connection to an Internet provider (B) that uses a broadcast-oriented system for satellite, cable or terrestrial data broadcasting so as to tend to the initiator the contents requested to a server that is adapted for said broadcast service (C), b) a server system (D) responding to the information request by the initiator; the server supplies the data to the gateway of the Internet provider (C), who then broadcast said data; c) a data extraction system (F) located on the receiver side (G), which extracts the content to be broadcast generated by the initiator, adapting the encapsulation to broadcast the contents using the UDP protocol for the Internet and MPEG-TS for audio-video.

## Description

### Object of the invention

The invention being presented is methods and systems for carrying out internet audio or video broadcast in systems that support digital data transmission such as satellite, land link or cable, without prior agreement between the broadcast service provider (satellite) and the provider of the content to be broadcasted.

### Background of the invention

Different international organisations such as the DVB (Digital Video Broadcasting) and the ETSI (European Telecommunication Standard Institute) have developed a set of standards for the broadcasting of data services and Internet on means adequate for wide-range broadcasting such as via satellite, land link or cable. These standards include procedures for encapsulating internet protocols and others in MPEG Transport Stream format, as well as the development of data carrousel services that do not require return channel from the receiver, that is, maintaining the unidirectional character of the transmission.

### Description of the invention

The invention being presented is a procedure that takes advantage of the specifications of the standards for providing broadcasting services where in principle there is a point-to-point internet transmission, and which has the advantage of not requiring prior agreement between the (satellite) broadcasting service provider and the provider of the content to be broadcasted. Currently, the provider of broadcasting services has to directly administer the sequentiation data carrousels and broadcast support. With the procedures described, the broadcaster can delegate this task, obtaining the same results.

The invention adds broadcasting services to the already existing satellite land or cable ones, without modifying the latter, taking advantage of the broadcasting capacity of these means. Any internet access provider user that uses these means can generate traffic that manifests as normal internet traffic (TCP protocol) without broadcast, but which an especially designed receiving system facilitates receiving as if it were. By using this invention any user can generate broadcast transmissions without needing the agreement of the provider, and generate his own broadcasting channels. The procedure requires:
a) a traffic initiator of generator (A), which establishes a conventional internet connection to an internet provider (B) that uses a data broadcasting system such as satellite, cable or land in order to send the content requested from a server (C) to the initiator.
b) a server system (D) that answers requests for information generated by the initiator. The server gives the data to the Internet provider gateway (C), which broadcasts it.
c) a data extraction system (F) located on the receiver side (G) that extracts the TCP package that comes through the broadcasting channel with the content requested by the initiator.

The broadcasted content can by typical Internet content (pages, html, etc), audio-video information (in turn encoded in MPEG-Transport Stream), or simply data. In these cases:
a) In the case of internet content, the information is extracted from the levels specified in ETSI regulations EN 301 192 and TR 101 202 (MPEG-TS section) until the RCP originally sent to the service initiator is obtained, and is reencapsulated in UDP packages and sent to an internet browser which will show the information generated by the initiator, without needing a return channel. This extraction system can be located in a module plugged into a satellite, land or cable decoder, which is connected to a personal computer, or as a peripheral unit of the personal computer itself.
b) In the case of audio-video content, the information is again extracted from the MPEG-TS level to the TCP format. The data loading of the TCP can be, in turn, a MPEG-TS stream that can be sent to a digital television decoder (or integrated digital television) so as to be shown on-screen.
c) In the case of other data contents, the data load is again extracted from the TCP package and sent to peripheral units that understand the format they are encapsulated in.

Within this general framework, there are two procedures for accessing contents.

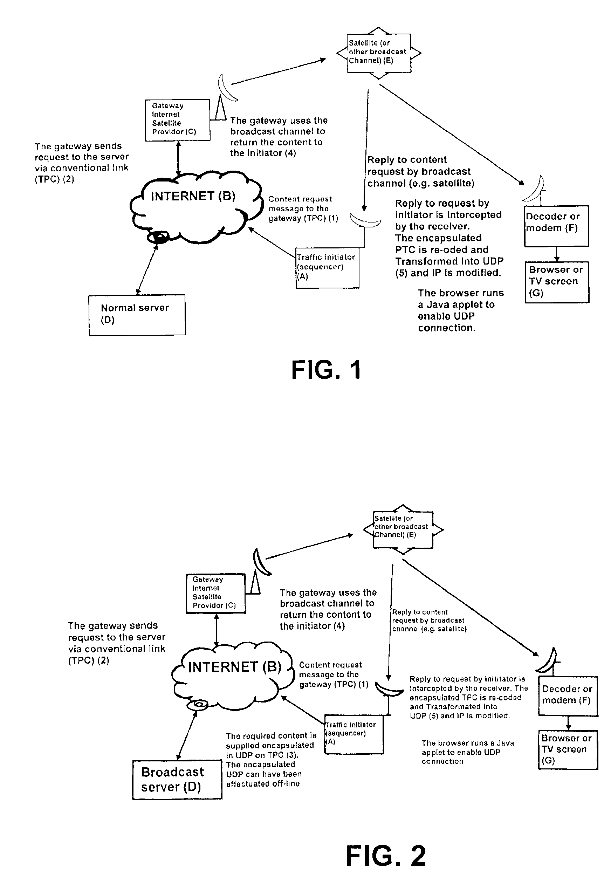

### Procedure 1. (see figure 1).

The broadcast server (D) encapsulates the contents to be transmitted (whether they are html pages or MPEG streams) in standard Internet TCP format. In the final user's (F) decoder or modem in the case of internet information, a translation of the TCP format is made into UDP to be transmitted to a browser while in the case of video-audio information the TCP data load is extracted in order to be sent to an MPEG decoder and/or television. This system has the drawback of the difficulty of filtering the contents inside the TCP package (the data can only be sent to a UDP port) but does not require modifications in the broadcast server (D).

### Procedure 2. (See figure 2).

The broadcast server (D) encapsulates the contents to be transmitted into UDP format, which in turn is re-encapsulated in standard TCP internet format. The TCP package gets a UDP package in its data area, on which the requested data is sent by the service initiator. In the final user's (F) decoder or modem the TCP layers are eliminated so as to leave only the UDP which is sent to the browser or television screen. In this case, the contents being directed to different UDP can be filtered, but on the contrary the transmission is less efficient and modifications are required in the broadcast server software.

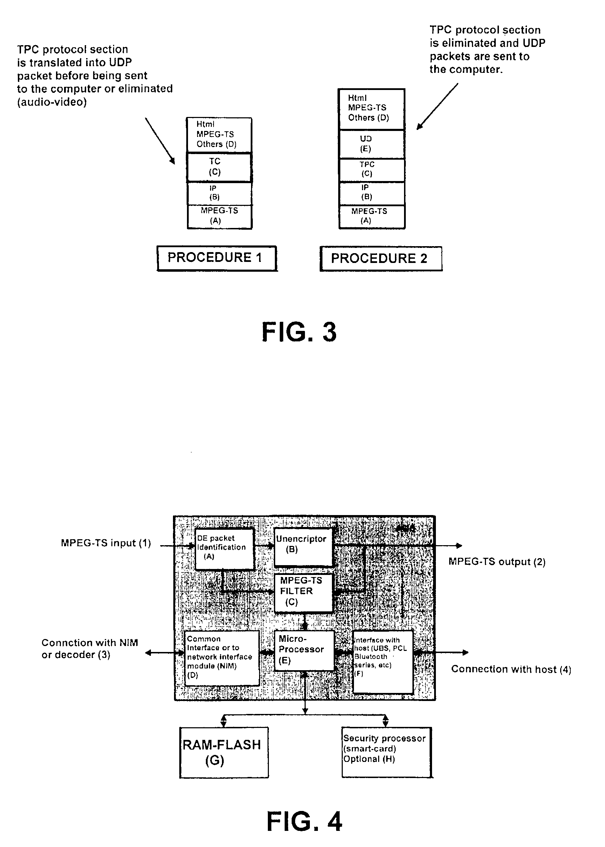

Both procedures for sending information can be seen in figure 3. The initiator selection is carried out in accordance with its means accessing direction (MAC) and IP direction. The different contents that the initiator can generate can be selected by the UDP port where they are encapsulated, if procedure 2 is used as described above. Since the UDP protocol does not require a return channel, it is not necessary for the final user (F) to set up a connection with a server.

The so-called initiator system (A) can be the same as the server (D), as long as the request is made by the gateway (C) and it sends the contents through the broadcasting channel.

It is not necessary for the final user to have a connection with the initiator system so as to control the sequence of contents, but of course it is possible to specify a return channel on the Internet itself in order to control the contents to be sequenced. The final user could have remote control (for example, by way of a short message service of GSM) or by way of a timer, of the set-up of reception in order to, for example, save contents (program downloading).

Internet contents can be encrypted at MPEG-transport level or at TCP level in order to control access to data. The users that are subscribed to a particular "program" of internet contents will receive a set of passwords (residing in an intelligent card, for example) that will make it possible to unencrypt the data in the user's receiving system. In the case of encrypting at MPEG-transport level, the Internet provider (C) should control the passwords and the encrypting of all his Internet access. In the case of encrypting at TCP level, the content servers would send the contents in code.

The procedures thus described can be used as support for internet channel services, webcams, IP-radios, teleconferencing, etc.

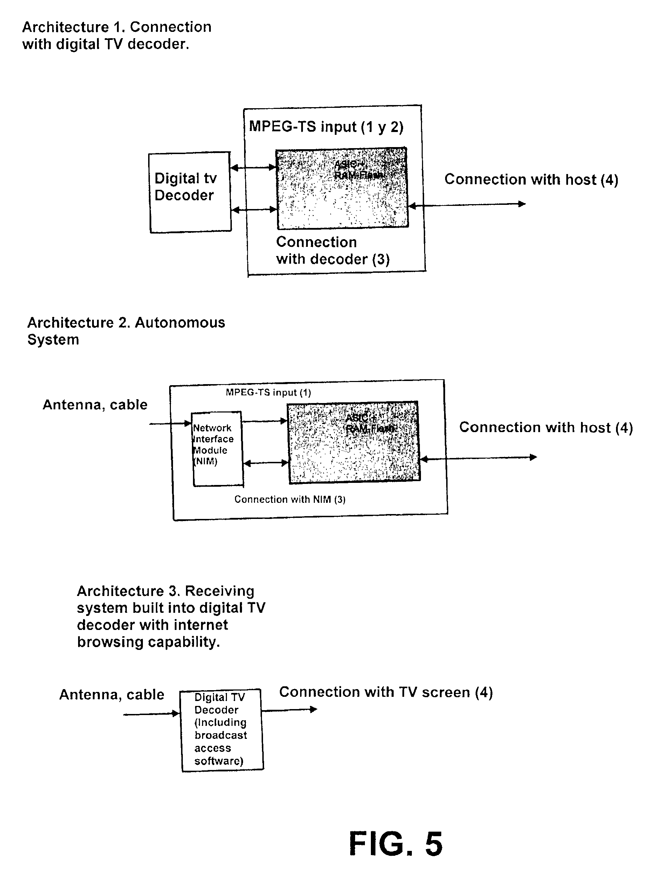

The receiving system is composed of an application specific integrated circuit (ASIC) plus memory (optionally integrated in the ASIC), and physical interfaces to the computer and network access. The ASIC (see figure 4) includes a microprocessor, an MPEG unencrypter, an MPEG-TS filter, an MPEG package identifier, and electrical and logical interfaces to a personal computer, to an intelligent card, and to network access whether via decoder or by way of a network interface module (NIM). Three architectures are designed for the receiver system (see figure 5):
- Architecture 1 of the receiver system has a common interface module (CENELEC EN50221, NRSS EIA-679 Part B standards), which is inserted into a digital television decoder. The decoder is responsible for extracting data proceeding from the network, which is passed on in MPEG-TS format The decoder can offer a series of resources to the receiver system such as showing text and graphics on screen. This architecture could be used with or without connection to a browser running on an additional computer. In an approximation without any connection to an external browser, the contents provided on TCP protocol can be, in turn, images in MPEG-TS protocol once extracted by the receiver system, they are in turn sent into the digital television decoder and shown on-screen. The selection of the information source would be made by tuning the decoder and navigating using the human-machine interface resources that are provided by the module decoders. In the case that there is a connection to an external browser, the personal computer would present the information extracted by the modules.
- Architecture 2 is an autonomous system (it does not require a decoder) that acts as a peripheral unit to a personal computer, either as an external module or built-in as an additional card within the PC. This architecture has a Network Interface Module (NIM) that effectuates the direct interfacing with the antenna or the cable connection.
- Architecture 3 is an MPEG decoder system (set-top-box) or built-in television receiver that includes a browser and software with the previously described capabilities to access the internet broadcast service and show it on the television screen.

### Brief description of the drawings

In order to improve the understanding of the invention, figures showing the broadcasting procedure and the associated reception system are included.

Figure 1 shows procedure 1 where data is sent by the server on TCP/IP format without any modification. The receiver system transforms the TCP packages into UDP packages before being sent to the computer where the browser is run.

Figure 2 shows procedure 2 where the data is in turn encapsulated in UDP so control can be had of the extraction in the receiver.

Figure 3 shows the protocol pile in both procedures.

Figure 4 shows the nucleus of the receiver system based on an application specific integrated circuit (ASIC) that facilitates extracting the data from the MPEG-system flow (MPEG-TS).

Figure 5 shows the three variations of the receiver system: The box marked with the dotted line shows the limits of the receiver system itself.

### Preferred embodiment of the invention

Traffic initiator system (sequencer) (A): The realisation of this program can be carried out by a program that can control network access and automatically browse on the network. This program only has to sequence the web page content access.

Broadcast server (D): For procedure 1 no modification of any kind is needed. For procedure 2 the contents have to be encapsulated in UDP. This can be done on-line (requiring a considerable modification of the server) or offline, encapsulating files to be sent in UDP packages, in which case no modification of the server itself is needed. UDP encapsulation can be carried out with a program in C, C++, Java or a similar language.

User receiver system (F):
- Hardware: the preferred embodiment is an application specific integrated circuit (ASIC) including the aforementioned elements. This embodiment facilitates lowering costs of the receiver system.
- Software: Programming in C, C++ of the soaked system, including drivers for the interface devices and browser application (UFP port selection, for example) and data extraction and TCP package restructuring.

User browser (G): Applet Java for listening to the UDP connection instead of the TCP that is the default connection included in browsers.

No other modification to other system components is required.

## Claims

1. Procedure 1 for broadcasting data on satellite broadcast networks, cable, land link or other, **characterised by**: A traffic initiator (Sequencer A) requests a content by way of an internet provider with access to broadcast (C), from a server (D) that encapsulates the contents to be transmitted (whether html pages, or MPEG streams) in the standard internet TCP format. The contents are sent to the traffic initiator by way of the broadcast, and at the same time, in the final user's (F) decoder or modem the extraction of the information is carried out. If it is Internet information, a translation from TCP format to UDP is made so as to be transmitted to a browser that, running a Java applet or the like, makes the connection by UDP. In the case of video-audio information, the load of TCP data is extracted in order to send it to an MPEG and/or television decoder.

2. Procedure 2 for broadcasting data on satellite broadcast networks, cable, land link or other, **characterised by**: A traffic initiator (sequencer A) requests a content by way of an internet provider with access to broadcast (C), from a server (D) that encapsulates the contents to be transmitted in UDP format, which in turn is re-encapsulated in standard internet format TCP. The TCP package has in its data area a UDP package which the data requested by the service initiator goes on. In the final user's (F) decoder or modem, the TCP layers are eliminated in order to leave only the UDP, which is sent to the browser that, running a Java applet or the like, makes the connection by UDP. In the case of video-audio information, the UDO level is also eliminated so as to deliver only MPEG-TS packages to the decoder.

3. Data extraction system valid for both of the aforementioned procedures, **characterised in that** it is based on a common interface module that is inserted in a digital television decoder with or without connection to a browser running on an additional computer. The decoder is responsible for the extraction of data proceeding from the network, which is passed on in MPEG-TS format, and can offer a series of resources to the receiver system, such as showing text and images on-screen. The contents provided on TCP protocol can be in turn images in MPEG-TS protocol which, once extracted by the receiver system, are in turn sent into the digital television decoder and shown on-screen. The selection of the information source is made by tuning the decoder and navigating using the human-machine interface resources that are provided to the modules by the decoders. In the case that there is a connection with an external browser, the personal computer would present the information extracted by the module. The connection can be made by USB, Bluetooth, infrared, PCI, PCMCIA, or series buses. The embodiment of the extraction system is with an ASIC that includes a microprocessor, an MPEG unencrypter, an MPEG-TS filter, an MPEG-TS package identifier, and electrical and logical interfaces to a personal computer, to an intelligent card, and to network access.

4. Data extracting system valid for the two aforementioned procedures, **characterised in that** it is based on an autonomous system (it does not require a decoder) that acts as a peripheral unit of a personal computer, whether as an external module or built-in as an additional card inside the personal computer. All of the data extracted would be presented on a browser running on the personal computer. The embodiment of the extraction system is by way of an ASIC that includes a microprocessor, an MPEG unencrypter, an MPEG-TS filter, an MPEG package identifier, and electrical and logical interfaces to a personal computer, to an intelligent card and to network access.

5. System for data extraction valid for the two aforementioned procedures, **characterised in that** it is built into a digital television decoder (set top box) or digital television receiver with capability to browse on Internet pages. All of the data extracted is presented on the television screen by way of a browser that is run in the decoder. The embodiment of the extraction system is carried out using already existing means.
